Europäisches Patentamt

European Patent Office

Office européen des brevets

(11) Veröffentlichungsnummer: **0 090 950**
B1

(12) # EUROPÄISCHE PATENTSCHRIFT

(45) Veröffentlichungstag der Patentschrift: **15.06.88**

(21) Anmeldenummer: **83102181.1**

(22) Anmeldetag: **05.03.83**

(51) Int. Cl.⁴: **B 29 C 47/00, F 41 F 17/10, F 41 F 17/04**

(54) Abschussrohr für Flugkörper.

(30) Priorität: **05.04.82 DE 3212721**

(43) Veröffentlichungstag der Anmeldung:
**12.10.83 Patentblatt 83/41**

(45) Bekanntmachung des Hinweises auf die
Patenterteilung:
**15.06.88 Patentblatt 88/24**

(84) Benannte Vertragsstaaten:
**DE FR GB IT**

(56) Entgegenhaltungen:
CH-A- 342 126
DE-A-1 703 248
DE-A-1 704 635
DE-A-1 944 152
DE-A-2 525 940
FR-A-2 069 654
GB-A-1 377 401
US-A-3 228 298
US-A-3 298 279

(73) Patentinhaber: **Dynamit Nobel
Aktiengesellschaft
Postfach 12 61
D-5210 Troisdorf (DE)**

(72) Erfinder: **Kurth, Josef
Am Hang 20a
D-5210 Troisdorf-Spich (DE)**
Erfinder: **Mathey, Christoph
Auf der Heide 34
D-5461 Ockenfels (DE)**
Erfinder: **Wissinger, Waldemar
Im Urnenfeld 19
D-5200 Siegburg (DE)**

(56) References cited:
H.F. MARK et al.: "Encyclopedia of polymer
science and technology", Teil 12, "Reinforced
plastics to starch", 1974, Interscience, New
York, USA

H.F. MARK et al.: "Encyclopedia of polymer
science and technology", Teil 8, "Keratin to
modacrylic fibers", 1974, Interscience, New
York, USA

Courier Press, Leamington Spa, England.

EP 0 090 950 B1

## Beschreibung

Die Erfindung richtet sich auf ein Verfahren zum kontinuierlichen Herstellen eines Rohres aus Kunststoff, bei dem an der inneren Mantelfläche in Längsrichtung des Rohres vor dem Aushärten des Kunststoffs Nuten eingedrückt und/oder Leisten angeformt werden und das Rohr durch eine Kalibriereinrichtung geführt wird, sowie auf die Verwendung dieses Rohres als Abschußrohr für Flugkörper.

Abschußrohre für Flugkörper sollen beim Start eine Zwangsrotation um die Längsachse des Flugkörpers erzeugen. Dadurch lassen sich während der ballistischen Flugphase die Auswirkungen von Flugkörperbaufehlern eliminieren. Ein solches dünnwandiges Abschußrohr für Raketen ist aus der DE—OS 17 03 248 bekannt. Das Rohr weist an den Innenseite schraubenlinienförmig verlaufende Nuten auf, in die über das Kaliber hinausragende Führungsstifte der Raketen eingreifen. Das Abschußrohr kann außer mit den die Stifte der Rakete aufnehmenden Nuten mit weiteren in Längsrichtung des Rohres verlaufenden Sicken versehen sein.

Die Fertigungskosten eines solchen Rohres sind hoch; die Nuten müssen durch spanabhebende Verfahren oder durch spanlose Verformung in die Rohrwand eingearbeitet werden.

Aus der US 3 298 279 ist ein aus mit Glasfasern verstärktem Kunststoff hergestelltes Abschußrohr bekannt. Dabei werden in einem diskontinuierlichen Verfahren Glasfaserrovings um einen Dorn gewickelt, der mit schraubenlinienförmig verlaufenden Leisten versehen ist, die auf der Form aushärten. Auch diese Fertigung ist mit einem hohen Fertigungsaufwand verbunden.

Der Erfindung liegt die Aufgabe zugrunde, ein Verfahren zur kontinuierlichen Herstellung von Kunststoffrohren zu entwickeln, die hinsichtlich Festigkeit und der Gestaltung der inneren Rohroberfläche den Anforderungen als Abschußrohr für Flugkörper gerecht werden.

Die Aufgabe wird dadurch gelöst, daß an einer feststehenden Kalibriereinrichtung schraubenlinienförmig verlaufende Konturen, die in die Nuten eingreifen bzw. an denen die Leisten entlanggleiten, dem Rohr einen axialen Drall erteilen.

Parallel zur Rohrachse verlaufende Nuten oder Leisten werden in bekannter Weise erzeugt. Das wesentliche Erfindungsmerkmal liegt darin, daß der erwünschte Drall in einer unmittelbar nachfolgenden, feststehenden Kalibriereinrichtung mit schraubenlinienförmig verlaufenden Konturen erzeugt wird. Das aus der Kalibriereinrichtung austretende Rohr rotiert entsprechend der Steigung der Kontur und der axialen Geschwindigkeit des Rohres.

Bei einem bevorzugten Verfahren wird ein thermoplastischer Kunststoff extrudiert (die angeformten Nuten oder Leisten verlaufen parallel zur Längsachse). Das Rohr erhält nach Passieren der Kalibriereinrichtung durch Kühlung seine endgültige Festigkeit. Die Nuten verlaufen schraubenlinienförmig.

Besonders bevorzugt wird bei diesem Verfahren ein faserverstärkter Kunststoff eingesetzt. Glasfaserverstärkte Thermoplaste werden bevorzugt nach zwei verschiedenen Verfahren hergestellt und eingesetzt:

Bei dem einen Verfahren werden Glasfaserstränge mit einer Schmelze des Thermoplasten getränkt und nach dem Erstarren werden die Stränge gehackt zu Granulat, das dann extrudiert wird.

Bei dem anderen Verfahren wird der Thermoplast in Pulverform mit den kurzgeschnittenen Glasfasern vermischt und direkt extrudiert.

Die eingesetzten Glasfasern sind vorzugsweise mit haftverbessernden Kupplungsagentien versehen, insbesondere organofunktionellen Silanhaftvermittlern. Hierbei werden Aminosilane, insbesondere für Thermoplaste und Acrylharze vorgesehen, Epoxysilane für den Einsatz in Polyamiden, Polyurethanen, Polysulfiden, Vinylsilane für EPDM-Kautschuke.

Das Rohr kann auch aus harzgetränkten Glasfaserrovings oder aus Glasfasern gewirkten Bändern aufgebaut werden, wobei auch Nuten und/oder Leisten parallel zur Rohrachse eingedrückt oder angeformt werden; das Rohr erhält nach Passieren der Kalibriereinrichtung durch Erwärmung seine endgültige Festigkeit. Wegen der in Längs- und Umfangsrichtung wirkenden Reibungskräfte zwischen der Oberfläche des Rohres und der Oberfläche der Kalibriereinrichtung kann es zweckmäßig sein, ein Gleitmittel auf die innere und/oder äußere Oberfläche des Rohres aufzubringen. Dies kann entweder kurz vor der Kalibriereinrichtung oder auch bereits noch innerhalb des Extrusionswerkzeugs geschehen. Als Gleitmittel können beispielsweise Fettsäuren und Fettalkohole, Ester hiervon, Paraffinwachse und oxidierte oder nichtoxidierte hochmolekulare Polyethylenwachse eingesetzt werden.

Bevorzugt sind Verfahren, bei denen wenigstens eine schraubenlinienförmig verlaufende Kontur an der Kalibriereinrichtung an der Außenfläche oder der Innenfläche des Rohres in eine Nut eingreift oder an einer Leiste entlanggleitet und dabei das Rohr verdrillt. Bei einer bevorzugten Verfahrensvariante wird das faserverstärkte verdrillte Rohr im gleichen Extrusionsprozeß mit unverstärktem Kunststoff innen oder außen oder beidseitig zusätzlich beschichtet.

Die nach dem erfindungsgemäßen Verfahren hergestellten Rohre eignen sich besonders als Abschußrohre für Flugkörper.

Bevorzugt eignen sich für das Rohr glasfaserverstärkte Formmassen, enthaltend auf 100 Gew.-Teile thermoplastischen Kunststoff, insbesondere Hart-PVC, Polyolefine, Ethylen-Copolymere, Polypropylen und Polypropylen-Copolymere, Polyamide, Polybuten, fluorhaltige Polymere wie Polyvinylidenfluorid, Polyvinylfluorid, Polytetrafluorethylen, Ethylentetrafluorethylen-Copolymere, schlagfeste und hochschlagfeste Polystyrole (SAN, ABS), Polyphenylenoxid, Polyphenylensulfid, Polyoxymethylene, Polycarbonat, Polyethylenterephthalat, Polybutylenterephthalat, 10 bis 150 Gew.-Teile Glasfasern und ggf. noch außer den Glasfasern weitere anorganische Füllstoffe und/oder Kohlefasern sowie andere Additive.

Bevorzugt werden auf 100 Gew.-Teile thermoplastischen Kunststoff 30 bis 100 Gew.-Teile Glasfasern mit einem Durchmesser von 2 bis 25 µm bei einer Länge bis max. 12 mm eingesetzt.

Eine bevorzugte Formmasse zum Herstellen erfindungsgemäßer extrudierter Rohre enthält auf 100 Gew.-Teile Polyvinylchlorid, das einen K-Wert zwischen 55 bis 75 aufweist, 40 bis 80 Gew.-Teile Glasfasern mit einem Durchmesser zwischen 5 und 25 µm bei einer Länge von 0,5 bis 12 mm 0 bis 15 Gew.-Teile eines pulvrigen mineralischen Füllstoffs mit einem mittleren Teilchendurchmesser unter 50 um und 2,5 bis 5,0 Gew.-Teile Gleitmittel und bis 30 Gew.-Teile Modifier wie Ethylenvinylacetat, Acrylate, chloriertes Polyethylen, Acrylbutadienstyrol, Methacrylbutadienstyrol o. dgl.

Unter Polyvinylchlorid wird hier Polyvinylchlorid, Polyvinylidenchlorid, nachfluoriertes Polyvinylchlorid und die aus einem chlorierten Monomeren mindestens einem damit copolymerisierbaren Monomeren erhaltenen Copolymeren verstanden.

Die für die erfindungsgemäßen Massen geeigneten mineralischen Füllstoffe sind vorzugsweise gefällte oder nicht gefällte Calciumcarbonate, kolloidale Kieselsäuren, hydratisierte Tonerden, kalzinierte Tone und Aluminosilikate.

Bei einer bevorzugten Ausführungsform ist die Wanddicke des Rohres konstant. Das wird durch Einformen der Nuten erreicht.

Es ist jedoch auch möglich, daß das Rohr im Bereich der Führungsleisten um diese verstärkt ausgebildet ist.

Bei einem Innendurchmesser des Rohre zwischen 50 und 350 mm und bei einer Länge eines Abschußrohres bis 5 m werden Wanddicken zwischen 1 bis 15 mm bevorzugt.

Gemäß der Erfindung ist es bevorzugt, daß das Rohr innenseitig nur über einen Teil des Umfangs, insbesondere Im Bereich der Nuten und/oder Leisten, kalibriert ist.

Das Rohr zeichnet sich dadurch aus, daß in Längserstreckung des Rohres die Formmasse gleich dem axialen Drall längsorientiert ist wodurch die Festigkeitseigenschaften des Rohres insgesamt verbessert sind.

Zur Erhöhung der Festigkeit kann das Rohr außenseitig durch eine Wicklung, beispielsweise aus harzgetränkten Glasfasern, verstärkt sein.

Die Erfindung ist in der Zeichnung an einigen Beispielen erläutert.

Es zeigen:

Figur 1 ein Extrusionsschema mit Innenverdrillung;

Figur 2 Querschnitt A—A durch die Düse nach Figur 1;

Figur 3 Querschnitt B—B durch das Innenkaliber im Einlauf nach Figur 1;

Figur 4 Querschnitt C—C durch Innenkaliber im Auslauf nach Figur 1;

Figur 5 Extrusionsschema mit Außenverdrillung;

Figur 6 Querschnitt D—D nach Figur 5;

Figur 7 Querschnitt E—E nach Figur 5;

Figur 8 Querschnitt F—F nach Figur 5;

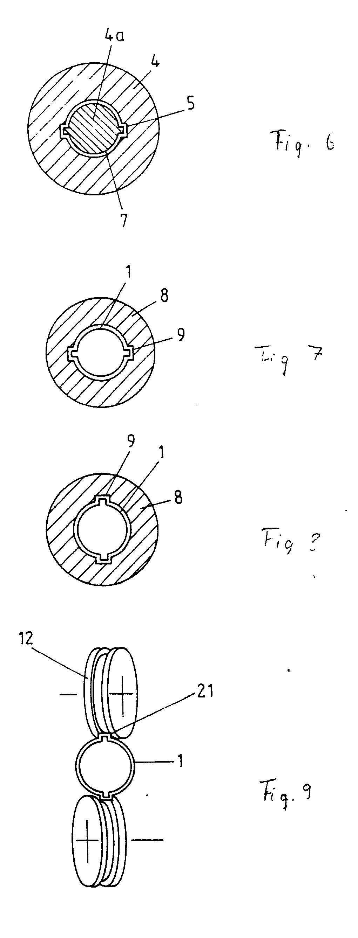

Figur 9 Querschnitt G—G nach Figur 5;

Figur 10 Rohr im Querschnitt;

Figur 11 Ausschnitt auf eine Aufsicht eines Rohres nach Figur 10;

Figure 12 bis 18 weitere Varianten des Rohres im Querschnitt.

In den folgenden Beispielen sind ohne Einschränkung der Allgemeinheit Rohre aus thermoplastischen Kunststoffen beschrieben. Die Extrusions- und Kalbriertechniken sind beispielsweise aus Schiedrum, Plastverarbeiter (1979) 6, 321—328 "Kalibrieren und Kühlen von Rohren", bekannt.

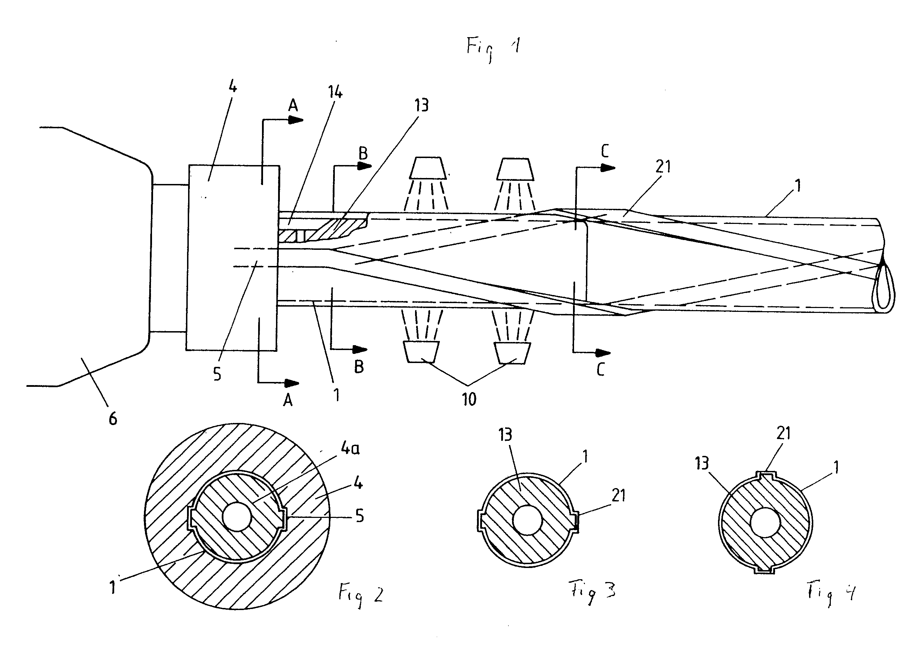

In Figur 1 wird eine thermoplastische Masse aus einem Extruder 6 durch eine Kalibriereinrichtung gepreßt. Sie besteht aus dem Werkzeug 4 mit axial verlaufenden Nuten 5 zum Anformen von zwei gegenüberliegenden Leisten 21 an der Außenseite des Rohres 1 und einem Kalibrierdorn 13, der auch mit einer entsprechenden Leiste versehen ist, die etwas schmäler ist als die Nut 5 an dem Außenteil 4 und für die Ausbildung einer Nut an der Innenseite des Rohres 1 sorgt.

Der Kalibrierdorn 13 ist gekühlt und mit Vakuum beaufschlagt. Eine zusätzliche Außenkülung 10 ist ebenfalls angeordnet. Der Kalibrierdorn 13 ist thermisch isoliert am Werkzeug befestigt. Der Kalibrierdorn 13 hat werkzeugseitig eine umlaufende Ausnehmung 14, die mit der Außenluft über einen Kanal o. dgl. in Verbindung steht und damit den Aufbau eines Unterdrucks verhindert.

Mit dieser Extrusionsmethode können auch rechteckige oder offene Profile an das Rohr angeformt werden.

Die Figure 2 bis 4 zeigen Schnitte A—A, B—B, C—C nach Figur 1. Die Außennut am Kalibrierdorn 13 verläuft von B—B bis C—C schraubenlinienförmig (cal 90°). Im Bereich des Werkzeugs 4 verlaufen die Nuten 5 gerade. Das Rohr muß drehend abgezogen werden.

Zue Verminderung der Reibungskräfte zwischen dem Rohr und der Kalibriereinrichtung känn es zweckmäßig sein, ein Gleitmittel aufzubringen. Das kann entweder kurz vor der Kalbibriereinrichtung oder auch bereits im Extrusionswerkzeug vorgenommen werden.

Das Schema in Figur 5 zeigt, daß die Verdrillung des Rohres 1 auch von der Außenseite des Rohres her möglich ist. Aus dem Werkzeug 4, das parallel zur Längsachse des Rohres 1 Nuten 5 für die Rippen 21 aufweist, preßt der Extruder 6 den Massenstrang axial aus. Dieser tritt wieder in die feststehende Kalibriereinrichtung 8 ein. Hieran sind schraubenlinienförmig verlaufende Nuten 9 zur Aufnahme der Rippen 21 mit Drall eingearbeitet. Die Masse fließt dann in noch plastischem Zustand, trotz ihres axial verlaufenden Austritts aus der Düse 4 den Nuten 9 der feststehenden Kalibriereinrichtung 8 folgend, drallförmig zur Längsachse. Das gilt für den gesamten Querschnitt des Rohres 1.

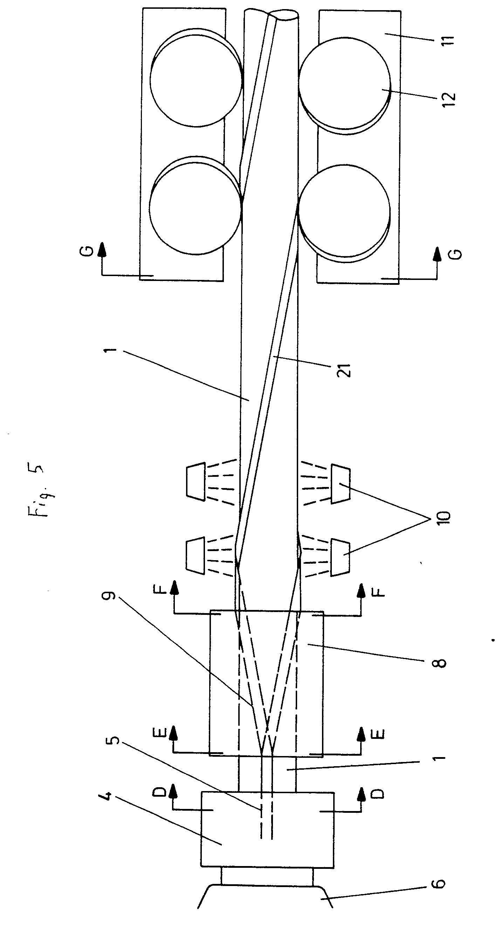

Wie an den Figuren 6 bis 8 zu erkennen ist, weisen die Nuten an der Innenseite des Rohres 1 aufgrund der Verdrillung (hier von außen her) den geforderten schraubenlinienförmigen Verlauf aus. Das kalibrierte und weitgehend abgekühlte Rohr 1 tritt drehend, entsprechend der Steigung der Nuten, an der Kalibriereinrichtung aus dem Kalibrierwerkzeug 8 aus. Das Rohr 1 muß drehend abgezogen werden. Ein innerhalb des Rohres 1 vorgesehener Kalibrierdorn für die Innenkalibrierung ist nicht dargestellt. Es reicht, daß nur partiell kalibriert wird, d.h. nur solche Flächenbereiche kalibriert werden, die eine Führungsfunktion übernehmen sollen. Es bewegt sich auch hier wieder jeder Punkt der Rohroberfläche an der Wand der Kalibriereinrichtung sowohl in axialer als auch in Umfangsrichtung. Es hat sich gezeigt, daß ein Massestrang, der noch im thermoplastischen Zustand in die Kalibriereinrichtung einläuft, auch die Reibungskräfte in Umfangsrichtung überwindet und mit Drall aus der Kalibriereinrichtung austritt.

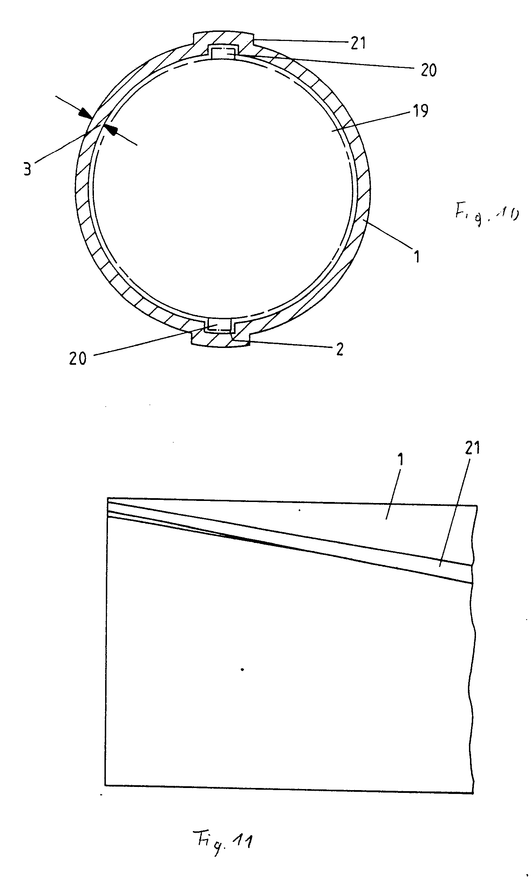

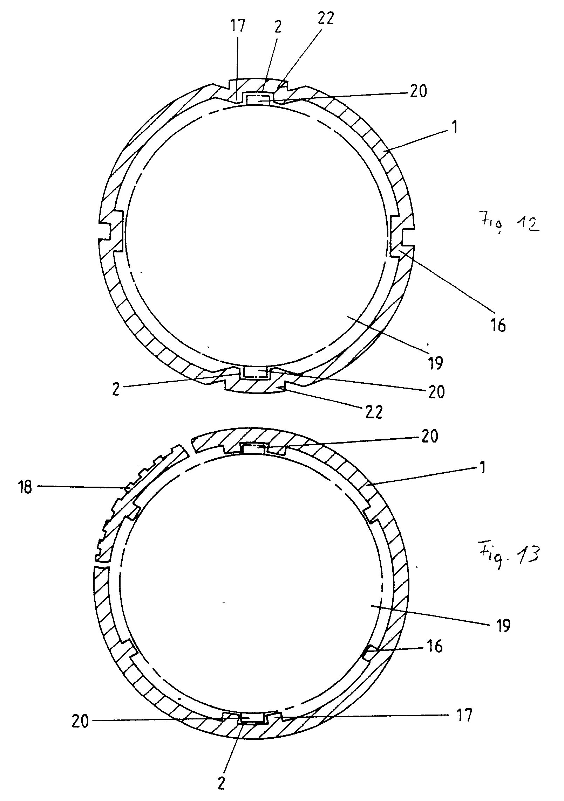

In den folgenden Figuren sind Querschnitte durch ein erfindungsgemäß hergestelltes Rohr dargestellt; solche Querschnitte sind für ein Abschußrohr für Raketen geeignet. Das Abschußrohr 1 in Figur 10, beispielsweise aus glasfaserverstärktem Hart-PVC extrudiert, weist die mit der Extrusion angeformten schraubenlinienförmig verlaufenden Nuten 2 in der Rohrinnenseite auf. Durch die außen angeformten Rippen 21 ist die Wanddicke überall näherungsweise gleich. Der Innendurchmesser des Abschußrohres 1 ist hierbei nur geringfügig größer als der Außendurchmesser des strichpunktiert dargestellten Flugkörpers 19. An dem Flugkörper 19 sind Führungsnokken 20 angeordnet, die in die Nuten 2 des Abschußrohres 1 eingreifen und in diesen geführt werden und auf diese Weise den Flugkörper beim Abschuß aus dem Abschußrohr 1 den gewünschten Drall verleihen. Der Drall wird je nach Größe des Abschußrohres und des Flugkörpers 8 von einer Steigung der Kontur zwischen 2 bis 15% bewirkt.

In der Figur 11 ist auszugsweise eine Aufsicht in Längserstreckung des Abschußrohres 1 nach Figur 10 dargestellt, wobei der leichte drallförmige Verlauf der Rippen 21 an der Außenseite erkennbar ist.

In den Figuren 12 bis 18 sind weitere mögliche Ausgestaltungen des Abschußrohres gemäß der Erfindung, z.B. aus glasfaserverstärktem thermoplastischem Kunststoff, hergestellt durch Extrusion, aufgeführt. Zwischen der Innenseite des Abschußrohres und dem Außendurchmesser des Flugkörpers bleibt ein größerer Spalt frei. Dies geschieht beispielsweise nach Firgur 12 in der Weise, daß die Nut 2 an der Innenseite des Abschußrohres zum Führen der Führungsnocken 20 des Flugkörpers 19 zwischen zwei vorstehenden Leisten 17 gebildet ist, die durch eine entsprechende Einformung 22 an der Außenseite des Abschußrohres 1 gebildet werden. Desweiteren können an der Innenseite des Abschußrohres zusätzliche innere Führungsleisten 16 für die Führung des Flugkörpers vorgesehen sein.

In der Figur 13 ist eine andere Variante eines Abschußrohres 1 dargestellt, das außenseitig, beispielsweise mit einer Profilierung 18, versehen sein kann, um nachträglich zusätzlich zur Verstärkung des Rohres eine Wicklung aufbringen zu können. Auch die Profilierung 18 verläuft schraubenlinienförmig. Innenseitig ist das Abschußrohr 1 mit paarweisen Führungsleisten 17 versehen, zwischen denen die Nut 2 gebildet ist, in der der Führungsnocken 20 des Flugkörpers geführt ist. Die Führungsleisten 17 verlaufen schraubenlinienförmig und geben damit dem Flugkörper den gewünschten Drall. Zusätzlich sind weitere vorstehende Leisten 16 über den Umfang verteilt an der Innenseite des Abschußrohres vorgesehen, die auch der Führung des Flugkörpers dienen.

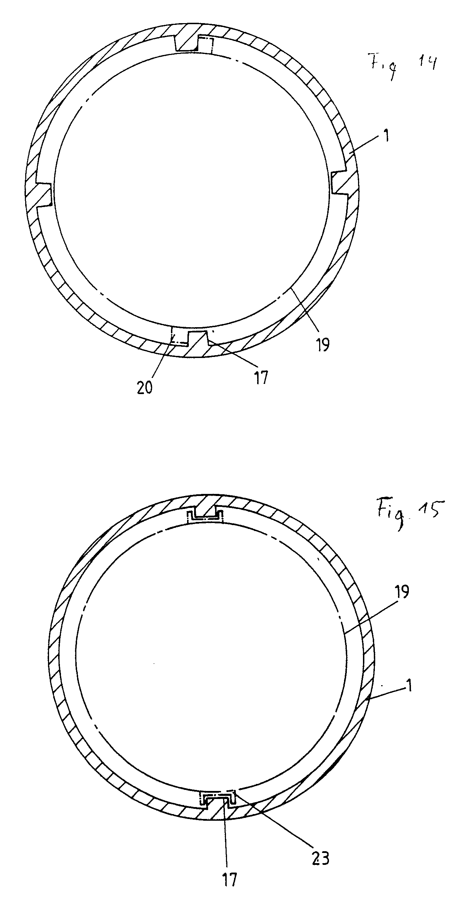

In der Figur 14 ist ein Abschußrohr 1 dargestellt, das innenseitig vier vorstehende Führungsleisten 17 aufweist. Hierbei ist vorgesehen, daß der Flugkörper 19 mit den Führungsnocken 20 einseitig an den Führungsleisten 17 anliegt.

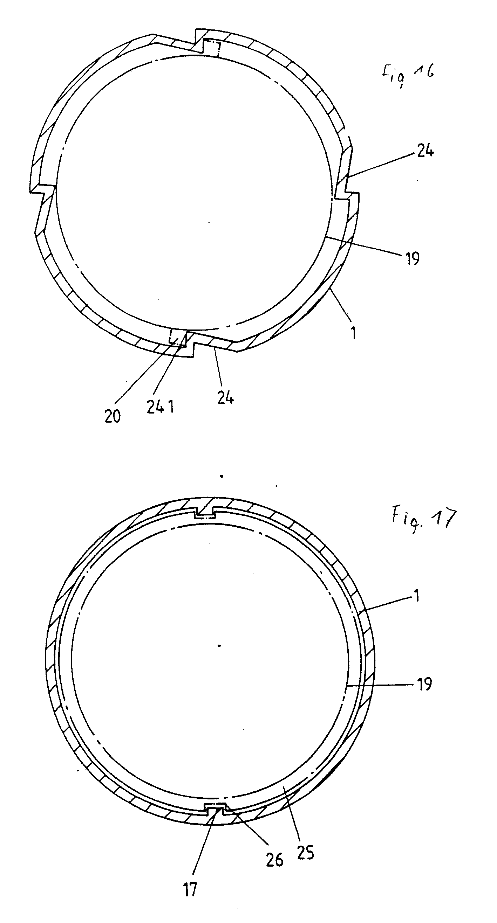

In der Figur 15 ist eine andere Möglichkeit der Führung des Flugkörpers in dem erfindungsgemäßen Abschußrohr dargestellt, bei der der Flugkörper mit einer U-förmigen Führung 23 ausgebildet ist, die die Führungsleisten 17 des Abschußrohres 1 umfaßt.

In der Figur 16 ist eine weitere Möglichkeit der Ausbildung des Abschußrohres 1 mit sickenartig eingeformten Führungsleisten 24 dargestellt, wobei die Führungsnocken 20 des Flugkörpers 19 nur einseitig an den Flächen 241 der angeformten Sicken anliegen und wegen deren schraubenlinienförmigem Verlauf dem Flugkörper beim Abschießen einen Drall aufprägen.

Bei dem Beispiel nach Figur 17 sind in dem Abschußrohr 1 einander gegenüberliegend Führungsleisten 17 an der Innenseite angeordnet. Der Flugkörper 19 weist einen aufgesetzten Führungsring 25 auf, in dem Nuten 26 vorgesehen sind, die die schraubenlinienförmig verlaufenden Führungsleisten 17 umfassen.

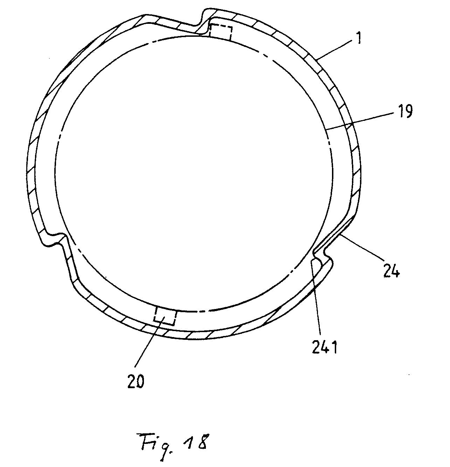

Bie dem Abschußrohr in Figur 18 sind nur drei Sicken über dem Umfang des Abschußrohres 1 vorgesehen, der Flugkörper 19 mit zwei Führungsnocken 20 wird nur an einer Führungsfläche 241 anliegend geführt.

Solche Abschußrohre aus glasfaserverstärkten Thermoplasten erreichen die Formsteifigkeit und Festigkeit, die für Abschußrohre benötigt werden. Es lassen sich übliche thermoplastische Materialien, wie z.B. Hart-PVC, verarbeiten. Bevorzugt werden jedoch aus Festigkeitsgründen faserverstärkte Kunststoffe, wie z.B. glasfaserverstärktes Polyamid. Aus Festigkeitsgründen kann es für bestimmte Fälle erforderlich sein, diese Abschußrohre außen noch mit einer weiteren Verstärkung zu versehen. Wegen der kontinuierlichen Fertigung der Rohre sind die Stückkosten eines Abschußrohres erheblich niedriger als die bekannter Rohre.

Prinzipiell können die Rohre statt durch Extrusions eines thermoplastischen Kunststoffs auch aus duroplastischem Werkstoff aufgebaut sein, wobei ein aus Hartz getränkten Glasfaserrovings oder aus Glasfasern gewirkten Bändern aufgebautes Rohr mit angeformten Leisten und/oder eingedrückten Nuten in grundsätzlich gleicher Weise, wie oben beschrieben, in eine Kalibriereinrichtung einläuft (Pultrusions-Technik); auf ein Innenkaliber kann nicht verzichtet werden. Bei dieser Technik wird das Kalibrierwerkzeug temperiert und dadurch der Kunststoff zur Vernetzung und Erstarrung gebrach. Auch hier ist ein drehender Abzug des Rohres erforderlich. Durch nachträgliche Wicklungen zus z.B. harzgetränkten Glasfasern, ist eine weitere Verstärkung des Drallrohres möglich.

## Patentansprüche

1. Verfahren zum kontinuierlichen Herstellen eines Rohres aus Kunststoff, bei dem an der inneren Mantelfläche in Längsrichtung des Rohres vor dem Aushärten des Kunststoffs Nuten eingedrückt und/oder Leisten angeformt werden und das Rohr durch eine Kalibriereinrichtung geführt wird, dadurch gekennzeichnet, daß an einer feststehenden Kalibriereinrichtung schraubenlinienförmig verlaufende Konturen, die in die Nut eingreifen bzw. an denen die Leisten antlanggleiten, dem Rohr einen axialen Drall erteilen.

2. Verfahren nach Anspruch 1, dadurch gekennzeichnet, daß ein thermoplastischer Kunststoff extrudiert wird und das Rohr nach Passieren der Kalibriereinrichtung durch Kühlung seine endgültige Festigkeit erhält.

3. Verfahren nach Anspruch 2, dadurch gekennzeichnet, daß ein faserverstärker Kunststoff eingesetzt wird.

4. Verfahren nach Anspruch 1, dadurch gekennzeichnet, daß das Rohr aus harzgetränkten Glasserrovings oder aus Glasfasern gewirkten Bändern aufgebaut wird und das Rohr nach Passieren der Kalibriereinrichtung durch Erwärmung seine endgültige Festigkeit erhält.

5. Verfahren nach einem der Ansprüche 1 bis 4, dadurch gekennzeichnet, daß auf der inneren und äußeren Oberfläche des Rohres entweder kurz vor dem Beginn des Kalibrierens oder noch im Bereich des Formens des Rohres ein Gleitmittel aufgebracht wird.

6. Verfahren nach einem der Ansprüche 1 bis 5, dadurch gekennzeichnet, daß wenigstens eine schraubenlinienförmig verlaufende Kontur an der Kalibriereinrichtung an der Außenfläche des Rohres in eine Nut eingreift oder an einer Leiste entlanggleitet und dabei das Rohr verdrillt.

7. Verfahren nach einem der Ansprüche 1 bis 5, dadurch gekennzeichnet, daß wenigstens eine schraubenlinienförmig verlaufende Kontur an der Kalibriereinrichtung, z.B. ein Kalibrierdorn, an der Innenfläche des Rohres in eine Nut eingreift oder an einer Leiste entlanggleitet und dabei das Rohr verdrillt.

8. Verfahren nach einem der Ansprüche 1 bis 3 oder 5 bis 7, dadurch gekennzeichnet, daß das Rohr im gleichen Arbeitsgang innen oder außen oder auf beiden Seiten zusätzlich beschichtet wird.

9. Rohr, hergestellt nach einem der Ansprüche 1 bis 8, dadurch gekennzeichnet, daß eine glasfaserverstärkte Formmasse bei der auf 100 Gew.-Teile thermoplastischem Kunststoff, insbesondere Hart-PVC, Polyolefine, Ethylen-Copolymere, Propylen und Propylen-Copolymere, Polyamide, Polybuten, fluorhaltige Polymere wie Polyvinylidenfluorid, Polyvinylfluorid, Polytetrafluorethylen, Ethylentetrafluorethylen-Copolymere, schlagfeste und hochschlagfeste Polystyrole (SAN, ABS), Polyphenylenoxid, Polyphenylensulfid, Polyoxymethylene, Polycarbonat, Polyethylenterephthalat, Polybutylenterephthalat, 10 bis 150 Gew.-Teile Glasfasern und ggf. noch außer den Glasfasern weitere anorganische Füllstoffe und/oder Kohlefasern sowie andere Additive enthalten sind, verwendet ist.

10. Rohr nach Anspruch 9, dadurch gekennzeichnet, daß auf 100 Gew.-Teile thermoplastischen Kunststoff 30 bis 100 Gew.-Teile Glasfasern in der Formmasse enthalten sind.

11. Rohr nach Anspruch 9 oder 10, dadurch gekennzeichnet, daß Glasfasern mit einem Durchmesser von 2 bis 25 μm bei einer Länge bis maximal 12 mm eingesetzt sind.

12. Rohr nach einem der Ansprüche 9, 10 oder 11, dadurch gekennzeichnet, daß eine Formmasse enthaltend auf 100 Gew.-Teile Polyvinylchlorid, das einen K-Wert zwischen 55 und 75 aufweist, 40 bis 80 Gew.-Teile Glasfasern mit einem Durchmesser zwischen 5 und 25 μm bei einer Länge von 0,5 bis 12 mm, 0 bis 15 Gew.-Teile eines pulvrigen mineralischen Füllstoffs mit einem mittleren Teilchendurchmesser unter 50 μm und 2,5 bis 5,0 Gew.-Teile Gleitmittel und bis 30 Gew.-Teile Modifier wie Ethylenvinylacetat, Acrylate, chloriertes Polyethylen, Acrylbutadienstyrol, Methacrylbutadienstyrol o. dgl. zugesetzt sind.

13. Rohr nach einem der Ansprüche 9 bis 12, dadurch gekennzeichnet, daß das Rohr mit konstanter Wanddicke extrudiert ist.

14. Rohr nach einem der Ansprüche 9 bis 13, dadurch gekennzeichnet, daß das Rohr im Bereich der Führungsleisten um diese verstärkt ausgebildet ist.

15. Rohr nach einem der Ansprüche 9 bis 14, dadurch gekennzeichnet, daß bei einem Innendurchmesser des Rohres zwischen 50 und 350 mm und bei einer Länge bis zu 5 m die Wanddicke zwischen 1 und 15 mm beträgt.

16. Rohr nach einem der Ansprüche 9 bis 15, dadurch gekennzeichnet, daß das Rohr innenseitig nur über einen Teil des Umfangs, insbesondere im Bereich der Nuten und/oder Leisten, kalibriert ist.

17. Rohr nach einem der Ansprüche 9 bis 16, dadurch gekennzeichnet, daß das Rohr innenseitig und außenseitig, ggf nur über Teilflächen, kalibriert ist.

18. Rohr nach einem der Ansprüche 9 bis 17, dadurch gekennzeichnet, daß in Längserstreckung des Rohrs die Formmasse mit axialem Drall längsorientiert ist.

19. Rohr nach einem der Ansprüche 9 bis 18, dadurch gekennzeichnet, daß es außenseitig durch eine Wicklung, beispielsweise aus harzgetränkten Glasfasern, verstärkt ist.

## Revendications

1. Procédé pour la fabrication continue d'un tube en matiere plastique, dans lequel les rainures et/ou des nervures sont formees sur la face intérieure d'enveloppe dans le sens de la longueur du tube avant le durcissement de la matière plastique et le tube est guidé à travers un dispositif de calibrage, caractérisé en ce que des contours, qui s'étendent sous forms hélicoïdale sur un dispositif de calibrage fixe et s'engagent dans les rainures ou le long desquels glissent les nervures, appliquent au tube une torsion autour de son axe.

2. Procédé selon la revendication 1, caractérisé en ce qu'une matière thermoplastique est extrudée et le tube reçoit apres son passage dans le dispositif de calibrage sa stabilité définitive par refroidissement.

3. Procédé selon la revendication 2, caractérisé en ce qu'une matière plastique renforcée par des fibres est utilisee.

4. Procédé selon la revendication 1, caractérisé en ce que le tube est constitué de rovings de fibres de verre impregnes de resine ou de bandes tressées à partir de fibres de verre et que le tube reçoit aprés son passage dans le dispositif de calibrage sa stabilité définitive par échauffement.

5. Procédé selon l'une quelconque des revendications 1 à 4, caractérisé en ce qu'un lubrifiant est appliqué sur les surfaces intérieure et extérieure du tube, soit juste avant le début du calibrage soit encore dans la zone de formage du tube.

6. Procédé selon l'une quelconque des revendications 1 à 5, caractérisé en ce qu'au moins un contour hélicoïdal sur le dispositif de calibrage s'engage dans une rainure ou glisse le long d'une nervure sur la face extérieure du tube et tord ainsi ce dernier.

7. Procédé selon l'une quelconque des revendications 1 à 5, caractérisé en ce qu'au moins un contour hélicoïdal sur le dispositif de calibrage, par exemple un mandrin de calibrage, s'engage dans une rainure ou glisse le long d'une nervure sur la face intérieure du tube et tord ainsi ce dernier.

8. Procédé selon l'une quelconque des revendications 1 à 3 ou 5 à 7, caractérisé en ce que pendant la même opération le tube est en plus recouvert à l'intérieur ou à l'extérieur ou sur les deux faces.

9. Tube fabriqué selon l'une quelconque des revendications 1 à 8, caractérisé en ce qu'on utilise une masse moulable renforcée par fibres de verre qui contient pour 100 parties en poids de matière thermoplastique, notamment du PCV dur, des polyoléfines, des copolymères d'éthylène, du propylène et des copolymères de propylène, des polyamides, du polybutène, des polymères fluorés tels que du poly(fluorure de vinylidène), du poly(fluorure de vinyle), du polytétrafluoréthylène, des copolymères éthylène/tétrafluoréthy- lène, des polystyrènes résistant aux chocs et à haute résistance aux chocs (SAN, ABS), du poly(oxyphénylène), du poly(sulfure de phénylène), des polyoxyméthylènes, du polycarbonate, du poly(téréphtalate d'éthylène), du poly(téréphtalate de butylène), de 10 à 150 parties en poids de fibres de verre et éventuellement en plus des fibres de verre d'autres charges minérales et/ou des fibres de carbone ainsi que d'autres additifs.

10. Tube selon la revendication 9, caractérisé en ce que la masse moulable contient pour 100 parties en poids de matière thermoplastique de 30 à 100 parties en poids de fibres de verre.

11. Tube selon la revendication 9 ou 10, caractérisé en ce que des fibres de verre ayant un diamètre de 2 à 25 µm pour une longueur d'au maximum 12 mm sont utilisées.

12. Tube selon l'une quelconque des revendications 9, 10 ou 11, caractérisé en ce qu'à une masse moulable sont ajoutés pour 100 parties en poids de poly(chlorure de vinyle), qui présente une valeur K entre 55 et 75 , 40 à 80 parties en poids de fibres de verre ayant un diamètre situé entre 5 et 25 µm pour une longueur allant de 0,5 à 12 mm 0 à 15 parties en poids d'une charge minérale en poudre ayant un diamètre moyen de particules qui est inférieur à 50 µm, et 2,5 à 5,0 parties en poids de lubrifiant et jusqu'à 30 parties en poids d'agent modifiant tel que l'éthylène/acétate de vinyle, des acrylates, du polyéthylène chloré, de l'acryl/butadiène/styrène, du méthacryl/butadiène/styrène ou analogue.

13. Tube selon l'une quelconque des revendications 9 à 12, caractérisé en ce que le tube est extrudé avec une épaisseur de paroi constante.

14. Tube selon l'une quelconque des revendications 9 à 13, caractérisé en ce que le tube est renforcé dans la zone des nervures de guidage.

15. Tube selon l'une quelconque des revendications 9 à 14, caractérisé en ce que pour un diamètre intérieur du tube entre 50 et 350 mm et pour une longueur jusqu'à 5 m, l'épaisseur de paroi se situe entre 1 et 15 mm.

16. Tube selon l'une quelconque des revendications 9 à 15, caractérisé en ce que le tube n'est calibré sur la face intérieure que sur une partie de la périphérie, notamment dans la zone des rainures et/ou nervures.

17. Tube selon l'une quelconque des revendications 9 à 16, caractérisé en ce que le tube est calibre sur les faces intérieure et extérieure éventuellement sur des surfaces partielles seulement.

18. Tube selon l'une quelconque des revendications 9 à 17, caractérisé en ce que dans le sens longitudinal du tube, la masse moulable est orientée en longueur avec une torsion autour de l'axe.

19. Tube selon l'une quelconque des revendications 9 à 18, caractérisé en ce que le tube est renforcé sur la face extérieure par un enroulement, par exemple en fibres de verre imprégnées de résine.

## Claims

1. Process for the continuous production of a tube from plastics material in which grooves are impressed and/or ridges are moulded on the internal surface of the tube in the longitudinal direction before the hardening of the plastics material and the tube is guided through a calibrating arrangement, characterised in that contours running helically on a stationary calibrating arrangement, which contours engage the groove or on which the ridges ride, impart to the tube an axial spiral thread.

2. Process according to claim 1, characterised in that a thermoplastic plastics material is extruded and the tube obtains its final strength by cooling after travel through the calibrating arrangement.

3. Process according to claim 2, characterised in that a fibre reinforced plastics material is employed.

4. Process according to claim 1, characterised in that the tube is constructed from resin impregnated glass fibre rovings or from tapes produced from glass fibres and the tube obtains its final strength by heating after passage through the calibrating arrangement.

5. Process according to one of claims 1 to 4, characterised in that a lubricant is applied to the internal and external surfaces of the tube either shortly before the beginning of the calibration or even in the region of the shaping of the tube.

6. Process according to one of claims 1 to 5, characterised in that at least one contour running helically on the external surface of the tube in the calibrating arrangement engages in a groove or rides on a ridge and as a result the tube twists.

7. Process according to one of claims 1 to 5, characterised in that at least one contour running helically on the calibrating arrangement, e.g. a calibrating pin, engages the inner surface of the tube in a groove or rides on a ridge and as a result the tube twists.

8. Process according to one of claims 1 to 3 or 5 to 7, characterised in that the tube is additionally coated internally or externally or on both surfaces in the same working operation.

9. Tube produced according to one of claims 1 to 8, characterised in that there is used a glass fibre reinforced moulding composition in which 10 to 150 parts of glass fibres and optionally in addition to the glass fibres further inorganic fillers and/or carbon fibres as well as other additives are contained, per 100 parts by weight of thermoplastic plastics, in particular hard PVC polyolefin, ethylene copolymers, propylene and propylene copolymers, polyamides, polybutene, fluorine-containing polymers such as polyvinylidene fluoride, polyvinyl fluoride, polytetrafluoroethylene, ethylenetetrafluoroethylene copolymers impact resistant and high impact resistant polystyrenes (SAN, ABS), polyphenylene oxide, polyphenylene sulphide, polyoxymethylene, polycarbonate, polyethylene terephthalate, polybutylene terephthalate.

10. Tube according to claim 9, characterised in that 30 to 100 parts by weight of glass fibres are contained in the moulding composition per 100 parts by weight of thermoplastic plastics material.

11. Tube according to claim 9 or 10, characterised in that there are incorporated glass fibres with a diameter of 2 to 25 µm in a length up to a maximum of 12 mm.

12. Tube according to one of claims 9, 10 or 11, characterised in that a moulding composition yielding 100 parts by weight of polyvinyl chloride, which possesses a K value between 55 and 75, 40 to 80 parts by weight of glass fibres with a diameter between 5 and 25 µm in a length of 0.5 to 12 mm, 0 to 15 parts by weight of a pulverous mineral filler with a mean particle diameter below 50 µm and 2.5 to 5.0 parts by weight lubricant and up to 30 parts by weight of modifier such as ethylene-vinyl acetate, acrylate, chlorinated polyethylene, acrylic-butadiene-styrene, methacrylic-butadiene-styrene or the like are admixed.

13. Tube according to one of claims 9 to 12, characterised in that the tube is extruded with constant wall thickness.

14. Tube according to one of claims 9 to 13, characterised in that, in the region of the guide ridges, the tube is formed reinforced about these.

15. Tube according to one of claims 9 to 14, characterised in that, with an internal diameter of the tube between 50 and 350 mm and with a length of up to 5 m, the wall thickness amounts to between 1 and 15 mm.

16. Tube according to one of claims 9 to 15, characterised in that the tube is calibrated on its inside only over a part of the circumference, in particular in the region of the grooves and/or ridges.

17. Tube according to one of claims 9 to 16, characterised in that the tube is calibrated on its inside and on its outside, possibly only over part surfaces.

18. Tube according to one of claims 9 to 17, characterised in that the moulding composition is longitudinally oriented with axial spiral twist in the longitudinal direction of the tube.

19. Tube according to one of claims 9 to 18, characterised in that it is reinforced on its outside by means of a winding of resin reinforced glass fibres.

Fig 1

Fig 2

Fig 3

Fig 4

0 090 950

Fig. 5

0 090 950

0 090 950

Fig. 6

Fig 7

Fig ?

Fig. 9

3

Fig. 10

Fig. 11

Fig. 12

Fig. 13

# 0 090 950

Fig. 14

Fig. 15

Fig 16

Fig. 17

Fig. 18